# EUROPEAN PATENT SPECIFICATION

(11) **EP 0 397 318 B1**
(45) Date of publication and mention of the grant of the patent: **05.01.1994**
(21) Application number: 90303552.5
(22) Date of filing: 03.04.1990
(51) Int. Cl.: G01V 1/145, B06B 1/06

(54) **Energy source for seismic surveying**
Energiequelle für seismische Untersuchung
Source d'énergie pour l'exploration sismique

(30) Priority: 08.05.1989 US 349058
(43) Date of publication of application: 14.11.1990
(73) Proprietor: HALLIBURTON GEOPHYSICAL SERVICES, INC., Houston Texas 77236 (US)
(72) Inventor: Sallas, John L., Plano, Texas 75023 (US); Corrigan, Michael A., Carrollton, Texas 75006 (US)
(74) Representative: Wain, Christopher Paul

(56) References cited:
- EP-A- 0 213 950
- WO-A-87/05708
- FR-A- 1 605 218

## Description

The present invention relates to a seismic energy source apparatus especially, but not exclusively, for downhole use.

During exploratory oil and gas drilling, it is desirable to get as much information about the formations surrounding the wellbore as possible, in order to identify and accurately locate producing zones and potential producing zones. Well logs are often employed to determine resistivity, conductivity and other characteristics of formations.

In addition to well logs, it is also known to utilize geophones disposed in a wellbore at various depths to receive seismic energy generated by sources on the surface of the earth. The seismic energy, which is in the form of waves, refracts and reflects as it travels through the encountered formations until it is received by the geophones. Raw data from the geophones are subsequently processed by computer into usable forms for determining formation characteristics. One major disadvantage associated with the use of surface sources is the alteration of the source energy in the weathering layer or LVL on the way to the geophones.

Currently, the above described technique is used extensively in conjunction with "Vertical Seismic Profiling" or VSP, wherein a geophone is lowered in stages to various depths in the wellbore, while seismic energy is generated on the surface, at various locations (offsets) which are remote from the wellbore. However, the relocation of both geophones and seismic sources is both costly and time-consuming and, in populous areas, numerous or often-moved surface sources may be impractical.

To overcome the forgoing limitations of VSP, "Reverse Vertical Seismic Profiling" (RVSP) has been developed as an alternative. In RVSP, a seismic source is placed in a wellbore and an array of geophones is disposed on the surface. The use of a nondestructive downhole source having repetitive energy generation capability is critical for utilization with rapid, repetitive shots. Also, a suitable source of this type must also be usable without causing damage to the well in a cased or uncased hole. This technique also demonstrates the advantage of location below the weathering layer or LVL, and is therefore not subject to the above-mentioned attenuation prior to reflection from and refraction by deeper formations of interest.

Ideally, it is desirable to utilize various types of seismic energy waves, such as P-waves, Sᵥ-waves, and Sₕ-waves in formation analysis, in order to take advantage of the current state of information processing. This is particularly true in crosswell tomography (also known as cross-bore surveying) wherein a source is placed in one wellbore and geophones in an adjacent wellbore.

Several attempts at the creation of suitable downhole sources have been made in the recent past. U.S. patent specifications nos. 4,702,343 and 4,715,470 show, respectively, downhole seismic energy generated utilizing a servo-controlled hydraulic pumping mechanism or a linear electromagnetic actuator to drive a reactive mass. Seismic energy is imparted to the walls of the wellbore in these applications via a clamping mechanism. Pneumatic downhole seismic sources have also been attempted, as noted by H.C. Hardee, "Downhole Periodic Seismic Sources", Geophysical Prospecting 31, 57-71 (1983). All of the foregoing devices have the disadvantages of being relatively complex mechanically, difficult to package in a compact form suitable for deployment in small wellbores, and of requiring a significant input of energy in order to generate an acceptably strong seismic energy wave.

In a somewhat related field, both magnetostrictive and piezoelectric expansion phenomena have been suggested as the basis for downhole energy waves utilized for acoustic well logging (see for example U.S. patent specifications nos. 4,649,525, 4,682,308, and 4,700,803). Piezoelectric bender-type vibrational transducers are also known, such as that disclosed in U.S. patent specification no. 4,525,645. The use of stacked piezoelectric elements or wafers to generate significant longitudinal forces is also recognised in U.S. patent specifications nos. 4,753,507 and 4,674,907. The major problems, however, with using either directly applied piezoelectric or magnetostrictive forces to generate energy waves is associated with the relatively small length changes in either type of materials. In other words, while significant forces are possible, significant displacements to move a wave-generating element for seismic purposes are not. In addition, magnetostrictive devices, like their hydraulic or electromagnetic counterparts, require unacceptably high input power levels for downhole application.

We have now found a way in which piezoelectric devices can be satisfactorily used to generate seismic energy, without the above noted disadvantages.

According to the present invention, there is provided a seismic energy source apparatus for imparting seismic energy into earth formations, said seismic energy source comprising: a hydraulic system containing a substantially incompressible fluid and having at least one power piston and at least one drive piston wherein small movements in relation to a power piston generate substantially larger movements in relation to a drive piston; at least one piezoelectric element adapted to elongate and contract in response to the application of an appropriate electrical signal, the or each said piezoelectric element being coupled to a power piston to transmit movement thereto; and means for imparting seismic energy into earth formations in response to movement of the or each drive piston.

In one embodiment, the apparatus comprises a sonde adapted to be lowered into a wellbore; clamping means for selectively clamping said sonde within said wellbore at a selected depth; said hydraulic system and piezoelectric element(s) being housed in said sonde; and wherein said means for imparting seismic energy comprises a reaction mass coupled to a drive piston, wherein application of an appropriate electrical signal to said piezoelectric element will result in a substantial movement of said reaction mass to impart seismic energy into said earth formations surrounding said wellbore.

In another embodiment, the apparatus comprises a sonde adapted to be lowered into a wellbore; packer means for selectively isolating said sonde within a closed volume of fluid within said wellbore; the hydraulic system and the piezoelectric element being housed within said sonde; and wherein the apparatus also includes a second volume of substantially incompressible fluid coupled to said drive piston and disposed within said sonde, separated from said fluid within said closed volume of said wellbore by a flexible membrane, wherein application of an appropriate electrical signal to said piezoelectric element will result in the application of fluid pressure energy to said fluid within said wellbore through said flexible membrane.

In the present invention, a hydraulic system is employed to amplify the longitudinal displacement resulting from application of voltage to a stack of piezoelectric elements. The amplified displacement is utilized to accelerate a reaction mass, for example, to create a reaction force for the generation of seismic energy. Depending upon the configuration employed, reciprocating, torsional or radial displacements, motions and forces may be generated with the reaction waves.

The piezoelectric seismic vibrator of the present invention is highly efficient and requires little electrical current, as piezoelectric materials respond to an applied voltage, not current, in contrast to magnetostrictive devices which require large currents to generate the required flux densities via transformer windings.

One preferred embodiment of the present invention also possesses significant advantages over servo valve controlled hydraulic systems of the prior art, in that the prior art devices produce a non-linear response to the control or pilot signal. Also, of course, a servo valve cannot open, close or shift position instantaneously, nor can large amounts of hydraulic fluid travel into and out of a power chamber of a vibrator rapidly to move a reaction mass. In addition, there are significant energy losses associated with the use of servo valves and the long, convoluted and restricted hydraulic fluid passages associated therewith. The piezoelectric vibrator of the present invention requires no servo valves or fluid lines, and the response of the piezoelectric element stacks is essentially instantaneous.

In order that the invention may be more fully understood, reference is made to the accompanying drawings, in which:
Figure 1 schematically illustrates, in vertical section, one embodiment of downhole reciprocating energy source according to the present invention;
Figure 2 schematically illustrates, in vertical section, an embodiment of downhole, torsional energy source of the present invention;
Figure 3 schematically illustrates, in vertical section, an embodiment of downhole, fluid pressure energy source of the present invention;
Figure 4 schematically illustrates, in vertical elevation with part sectioned, an embodiment of surface reciprocating energy source of-the present invention; and
Figure 5 schematically illustrates in vertical section, an embodiment of downhole, radial compressional energy source of the present invention.

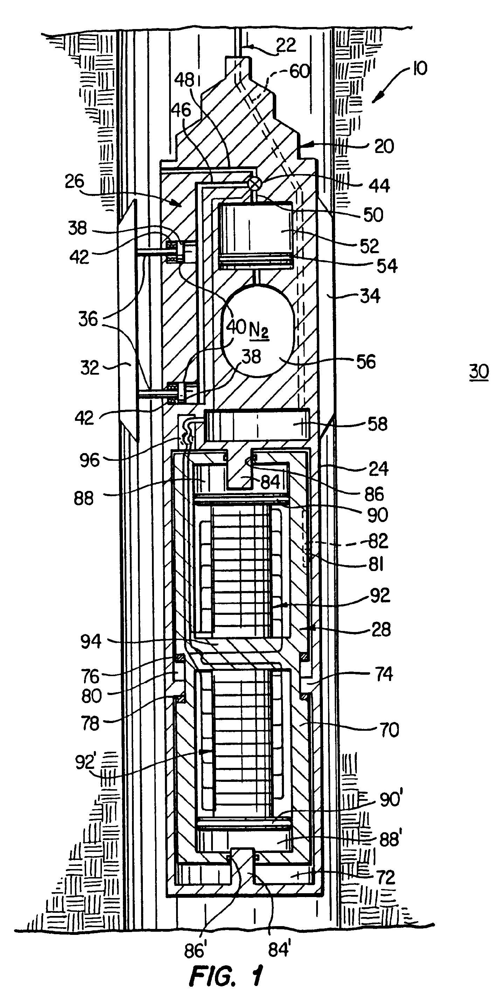

Referring now to Figure 1, a wellbore 10 is shown with a reciprocating energy source 20 therein. The source 20 may be lowered into the wellbore 10 via wireline 22. Source 20 comprises a housing 24 which contains a clamping assembly 26 and a seismic energy assembly 28.

The illustrated clamping assembly 26 is one example of such devices as known in the art, and its design does not in itself comprise a portion of the present invention except insofar as it is necessary to employ such an apparatus to effectively couple source 20 to the wellbore wall for transmission of seismic energy pulses from seismic energy assembly 28 to the surrounding formation 30. Clamping assembly 26 preferably includes moveable pad 32 and stationary pad 34 for contacting the wall of wellbore 10. Pad 32 is disposed at the end of a pair of actuator rods 36, having hydraulic pistons 38 disposed at their inner ends. Pistons 38 are located within cylinders 40 in housing 24, and are preferably biased inwardly to a retracted position by spring means 42, which may comprise coil, Belleville or other springs known in the art. Cylinders 40 are filled at their inner ends with a noncompressible hydraulic fluid and are in communication with three-way solenoid valve 44 via actuation passage 46. Solenoid valve 44 is in turn also in communication with bleed passage 48 and reservoir passage 50. Bleed passage 48 leads to the exterior of housing 24, and reservoir passage 50 leads from hydraulic fluid reservoir 52 to solenoid valve 44. Fluid in reservoir 52 is pressurized by reservoir piston 54, the lower side of which is acted upon by high-pressure N₂ in reservoir **56**, which is charged to an appropriate pressure level at the surface before source **20** is placed in the borehole.

Solenoid valve **44** is initially set in its first position, which isolates both actuation passage **46** and bleed passage **48** from reservoir passage **50**, before source **20** is run into the wellbore **10**. Movable pad **32** is retracted and maintained in retraction by spring means **42**. After source **20** reaches the desired wellbore location for generation of seismic energy, solenoid valve **46** is commanded to its second position by control module **58**, which is powered by wireline **22** via internal conductors **60**, shown in broken lines. In this position, hydraulic fluid is released from pressurized reservoir **52** through valve **44** into actuation passage **46**, wherein it acts upon pistons **38** in cylinders **40**, urging actuator rods **36** and pad **32**, outwardly into contact with the wall of wellbore **10**, whereby housing **24** is clamped in energy transmitting relationship thereto between pads **32** and **34**. At such time as source **20** is to be retrieved from wellbore **10**, solenoid valve **44** is commanded to its third position wherein bleed passage **48** is placed in communication with actuation passage **46**, and the pressurized fluid therein is exhausted into wellbore **10**. Thereafter, pad **32** is retracted against housing **20** due to the equalization of pressures on the inner and outer sides of piston **38** and the forces exerted by spring means **42**.

It should be understood that the above described clamping assembly **26** is set forth generally as one exemplary system of this type, and that other systems known in the art could serve an equivalent function. For example, a magnetically operated system could be employed, or a screw-jack type system driven by an electric motor; alternatively, a simple mechanically, hydraulically or explosively set packer- slip assembly such as is well known in the downhole tool art might be employed.

Referring again to **Figure 1**, seismic assembly **28** comprises a reciprocal inner reaction mass **70** which reciprocates in chamber **72** of housing **22**. Travel of the reaction mass **70** is limited by inwardly-extending annular flange **74** which contacts impact bearings **76** and **78** which are disposed at the upper and lower ends of vertically extending annular recess **80** in the outer wall of reaction mass **70**. Rotation of reaction mass **70** is prohibited by means of key **81** which extends inwardly from the wall of chamber **72** into vertical slot **82** in the outer wall of reaction mass **70**.

Disposed at the upper and lower ends of chamber **72** are drive pistons **84** and **84'** of cross-sectional areas A, which extend downwardly and upwardly, respectively into apertures **86** and **86'** in the wall of reaction mass **70**. As those skilled in the art will appreciate, annular seals may be utilized to effect a fluid tight seal therebetween. Drive chambers **88** and **88'**, containing a high bulk modulus fluid with high temperature stability, preferably mercury, are located at the upper and lower ends of reaction mass **70**, in communication with drive pistons **84** and **84'**, via apertures **86** and **86'**. The inward ends of drive chambers **88** and **88'** are defined by movable power pistons **90** and **90'**, which are of greater diameter and significantly greater cross-sectional areas than the ends of drive pistons **84** and **84'**. Located below and above power pistons **90** and **90'** respectively,lie two stacks of piezoelectric elements, **92** and **92'**, the innermost ends of which abut bulkhead **94** at the middle of reaction mass **70**. Piezoelectric element stacks **92** and **92'** comprise a plurality of thin circular, square, rectangular or other polyhedral shaped elements or discs of a poled piezoelectric material such as lead meta-niobate, ceramic lead zirconate titanate (PZT) ceramic or other suitable material, stacked vertically. Conductor set **96** leads from control module **58** to each piezoelectric element stack **92** and **92'**, in parallel, to supply a voltage thereto. The polarity of the voltage across each stack is opposite to that applied to the other stack. As a result, when a voltage is applied, one stack will expand in proportion to the electrical field, while the other stack will contract at the same time and in a linear fashion.

By applying a sinusoidal voltage to piezoelectric element stacks **92** and **92'**, each stack undergoes time varying extension and contraction. As, for example, stack **92** extends in length, it applies an upwardly directional force to power piston **90**, and so upon the fluid in drive chamber **88**. The attempted reduction by power piston **90** of the volume of chamber **88** results in reaction mass **70** being pushed away (downward) from drive piston **84** so that the volume of chamber **88** can remain constant, given the incompressible nature of the fluid in the chamber. When the voltage applied reverses, and stack **92** contracts, power piston **90** moves downwardly, tending to enlarge drive chamber **88**, whereby drive piston **84** is permitted to re-enter chamber **88** to a greater extent, again to keep chamber volume correct. As a result, reaction mass **70** moves upward.

As the polarity of the voltage applied to stack **92** is opposite to that applied to stack **92'**, the extension and contraction of stacks **92** and **92'** will augment each other in the movement of reaction mass **70**.

As ceramic materials do not in general, have great tensile strengths, it may be desirable to apply a compressional preload to stacks **92** and **92'** to avoid subsequent fracture of the individual discs within stacks **92** and **92'** under the application and reversal of voltages when source **20** is operated. Preloading may be accomplished in several ways however, the simplest way may be to provide a threaded plug (not shown) in the wall of reaction mass **70** adjacent chambers **88** and **88'**, so that such plugs may be driven inwardly to an appropriate point to induce compression of stacks **92** and **92'** via movement of power pistons **90** and **90'**. Alternatively, drive pistons **84** and **84'** may have source adjustable travel with respect to housing **22**, and preload applied in that manner. Finally, a screw mechanism or hydraulic system may be incorporated within bulkhead **94** to preload from the inner ends of stacks **92** and **92'**, the manner of preloading not being critical to the practice of the invention.

In operation, the embodiment of **Figure 1** generates seismic energy through longitudinal reciprocation of reaction mass **70** within chamber **72** in response to the extension and contraction of piezoelectric element stacks **92** and **92'**. The displacement of reaction mass **70** is the total extension of a piezoelectric stack as multiplied by the ratio of the cross-sectional area of power pistons **90** and **90'** to the cross-sectional area of drive pistons **84** and **84'**. For example, if piezoelectric stack **92** is capable of a total of 1/4'' (6.4mm) extension when subjected to a selected voltage of the correct polarity, and the area of power piston **90** is eight times the area of drive piston **84**, the displacement of reaction mass 70 will be 8 x 1/4'' (6.4mm), or 2'' (51mm) total. This amplified reaction mass displacement by means of the hydraulics of the system greatly increases the reaction force over prior art devices due to the increased acceleration of reaction mass **70** due to the well known relationship F=mg. A pressure transducer (not shown) may be located in chamber **88** or **88'** to sense the force developed by the actuator and used as a feedback signal to control module **52** for phase and amplitude control. Since source **20** is clamped to the wall of the wellbore **10** by clamping assembly **26**, as heretofore described, the reaction energy generated in seismic energy assembly **28** is transferred to the formation surrounding the borehole and radiated as seismic energy in the form of vertical shear, or Sᵥ, waves.

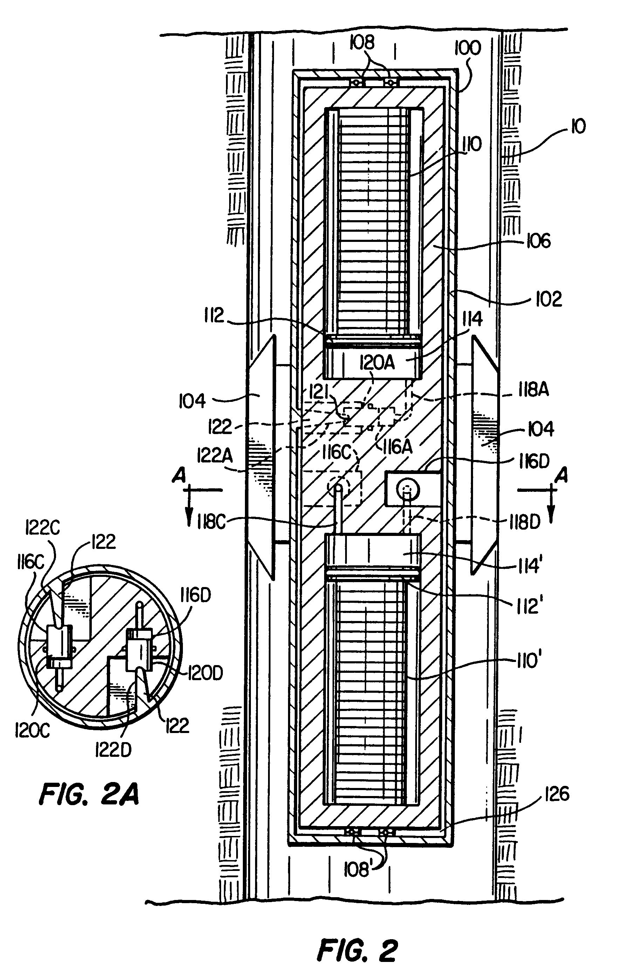

**Figure 2** depicts a second preferred embodiment of the present invention adapted to generate horizontal shear, or S_{H}, waves of seismic energy. Since a suitable deployment means, i.e. wireline, and clamp means have already been disclosed and described with respect to the embodiment of **Figure 1**, they have been omitted in **Figure 2**; however, it should be understood that such means would also be employed with the embodiment of **Figure 2**.

Seismic energy source **100** includes a housing **102** having associated therewith a plurality of clamps **104** which are extended outwardly therefrom into contact with the wall of wellbore **10** in which source **100** is disposed. The means for extending and retracting clamps **104**, of which there are preferably three or more equally circumferentially disposed about housing **102**, may be of any of the means discussed previously with respect to **Figure 1.**

Disposed within housing **102** is reaction mass **106**, which is supported therein by roller, ball or needle bearing assemblies **108** and **108'** so as to permit rotation of reaction mass **106** within housing **102**. Reaction mass **106** includes upper and lower piezoelectric disc stacks **110** and **110'**, which are preferably precompressionally loaded as in the embodiment of **Figure 1**, and which bear against power pistons **112** and **112'**, the latter defining outer, movable walls of power chambers **114** and **114'**, which are filled with a high bulk modulus relatively incompressible fluid, such as mercury. Power chambers **114** and **114'** are, in turn linked with drive cylinders **116A**, **116B**, **116C**, and **116D** by passages **118A**, **118B**, **118C**, and **118D**, respectively (**116B** and **118B** not being shown as they are located behind **116A** and **118A** in a plane perpendicular to the drawing **Figure 2**).

Drive cylinders **116** contain drive pistons **120A**, **120B**, **120C** and **120D** which are of cylindrical configuration and in fluid-tight sliding sealing engagement with the walls of cylinders **116.** Pistons **120** each have a leading face with a cup-shaped notch or recess **121** in the center thereof, into which a torsion rod **122** having a like configured end which extends from housing **102**. It should be noted that torsion rods **122** are all in radial plane, and offset from the diameter of reaction mass **106** and housing **102**, and that each rod **122** and its associated drive piston **120** are disposed in linkage recesses **124A**, **B**, **C**, and **D**, respectively in reaction mass **106** to permit uninhibited relative movement at the points of contact therebetween. The ends of rods **122** or the recesses **121** may comprise a low friction, high wear resistance bearing material to cut friction losses and promote an acceptable cycle life. Moreover, the space **126** between housing **102** and reaction mass **106** may be filled with a suitable liquid, such as hydraulic oil, to promote heat transfer to the surrounding wellbore and to lubricate bearing assemblies **108** and **108'** and the points of contact between drive pistons **120** and their associated torsion rods **122**.

As with source **20**, source **100** is activated by application of a suitable periodic voltage of alternating polarities to piezoelectric disc stacks **110** and **110'**. However, unlike source **30** of **Figure** **1**, the polarity of the voltage applied to each stack **110** and **110'** may be the same, so that both stacks elongate at the same time and contract at the same time, so as to double the force applied in one rotational direction to the wellbore wall. Alternatively, the applied polarities may be opposite, so as to obtain a positive rotational force in each direction.

Source **100** operates as follows. When a suitable voltage is applied to disc stacks **110** and **110'**, assuming the applied polarities are the same, both stacks elongate and drive power pistons **112** and **112'** longitudinally inwardly in power chambers **114** and **114'**, displacing the fluid therein into passages **116** and then into drive cylinders **118**, where the fluid acts upon drive pistons **120**, moving them outward into linkage recesses and acting upon torsion rods **122** , the contact points therebetween permitting a pivotal motion as pistons **120** extend and reaction mass **106** rotates, due to such extension, in the opposite direction. When the voltage polarity is reversed, disc stacks **110** and **110'** contract, and stored energy in tension rods **122** returns reaction mass **106** to its original position. Alternatively, as noted above, drive pistons **120**, and their associated tension rods **122** may be oriented so that two pistons in one plane drive in one rotational direction, and two in another plane drive in the opposite rotational direction. In such event, opposite polarity voltages would be applied to disc stacks **110** and **110'** at the same time, so that one would extend at the same instant the other would contract, thereby providing a positive rotational drive for reaction mass **106** in each direction.

Again, as with source **100**, the acceleration of the reaction mass provides the reaction force which is transmitted through clamps **104** to the wellbore wall and surrounding formation as seismic energy in the form of horizontal shear waves, or S_{H} waves.

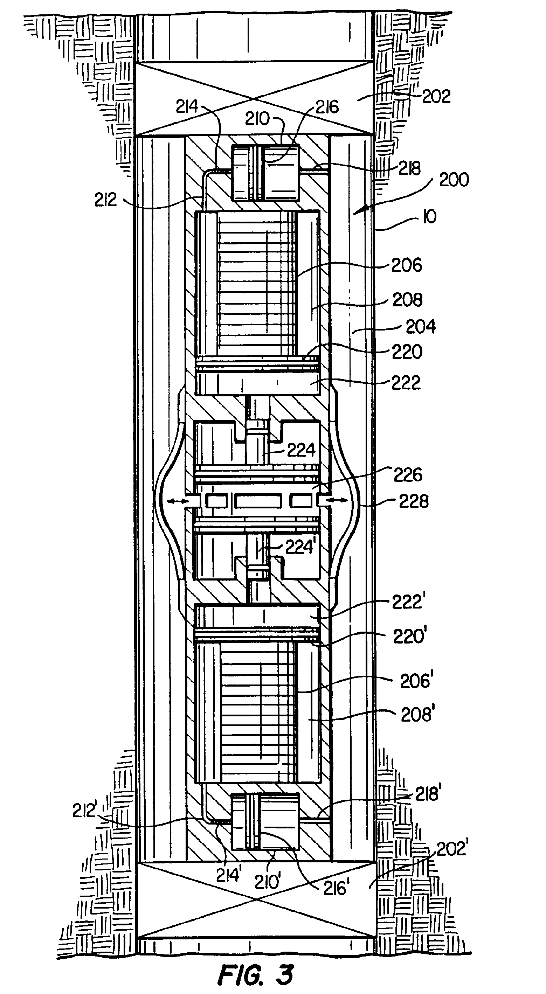

With reference now to **Figure 3**, there is depicted a downhole, fluid pressure energy source which may be implemented with the seismic energy source of the present invention. As above, suitable deployment means, including a wireline, have already been disclosed and will not be shown herein.

Fluid pressure energy source **200** is shown disposed within wellbore **10** and isolated within a particular section thereof by means of packers **202** and **202'**. Packers **202** and **202'** each comprise an inflatable or otherwise actuatable packer which may be operated to isolate energy source **200** within a closed volume **204** of borehole fluid in order to maximize the pulse effect. As above, energy source **200** includes piezoelectric disc stacks **206** and **206'** which are disposed within fluid filled chambers **208** and **208'**.

Fluid filled chambers **208** and **208'** are utilized to equalize the pressure on piezoelectric stacks **206** and **206'** in the following manner. Each fluid filled chamber **208** and **208'** is preferably connected to an equalization chamber **210** and **210'** respectively, by means of passages **212** and **212'**, each of which preferably includes a filter element **214** and **214'** which is utilized to prohibit the contamination of fluids therein by borehole fluids. Within each equalization chamber **210** and **210'** is a piston **216** and **216'** which is acted upon by borehole pressure, via passages **218** and **218'**. In this manner, the pressure within closed volume **204** acts upon pistons **216** and **216'** and thereby pressurizes the fluid within fluid filled chambers **208** and **208'** to a pressure equal to that within closed volume **204**.

As discussed with respect to the aforementioned embodiments, piezoelectric stacks **206** and **206'** bear against power pistons **220** and **220'**, each defining an outer movable wall of power chambers **222** and **222'**, which are filled with a high bulk modulus relatively incompressible fluid, such as mercury. Power chambers **222** and **222'** are in turn linked to drive pistons **224** and **224'**, which are of cylindrical configuration and in fluid-tight sliding sealing engagement within the walls of chambers **222** and **222'**. Thus, as appropriate voltages are applied to piezoelectric stacks **206** and **206'**, causing elongation and contraction thereof, drive cylinders **224** and **224'** are moved inward and outward, forcing an incompressible fluid in and out of aperture plate **226**. This pulsation of fluid is coupled to the closed volume of borehole fluid through flexible membrane **228** which preferably comprises a suitable rubber or synthetic fabric.

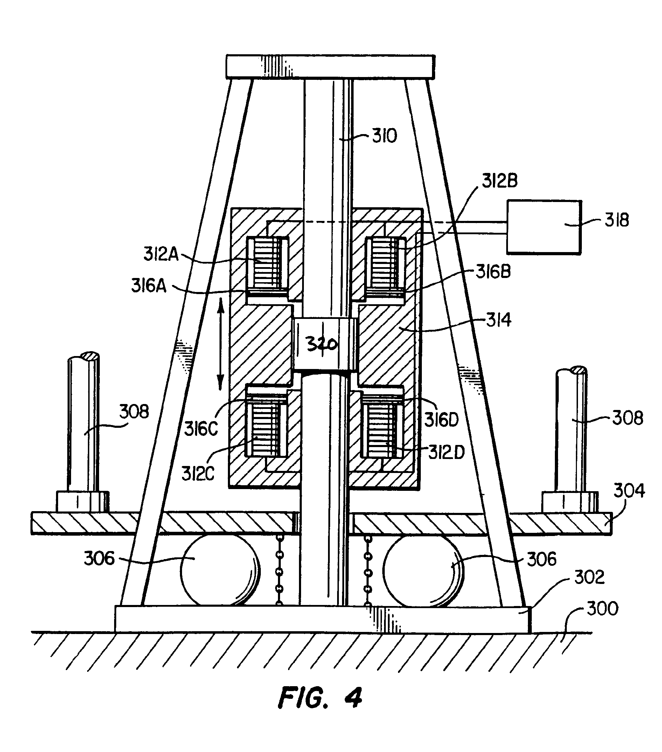

Referring now to **Figure 4**, there is depicted a surface reciprocating seismic energy source adaptation of the apparatus of the present invention. As may be seen, the embodiment depicted in **Figure 4** is designed to be operated upon the surface of the earth **300** and to transmit vibrational seismic signals into the earth via base plate **302**. The seismic source depicted within **Figure 4** in schematic form is preferably a transportable via a vehicle (not shown) which is supported upon vehicle supports **308** and serves to press baseplate **302** against the surface of the earth **300** by means of hold down plate **304**. Those skilled in the art will appreciate that hold down plate **304** is preferably isolated from base plate **302** by means of air bags **306** or other suitable devices.

As in the embodiments discussed above, the seismic source depicted within **Figure 4** includes a plurality of piezoelectric stacks **312A-312D**, each of which is electrically coupled to control means **318**. Control means **318** is preferably utilized to generate a suitable time varying electrical signal which is coupled to each piezoelectric element stack **312A-312D** in order to generate the desired elongation and contraction thereof. As above, each piezoelectric element stack bears upon a respective power piston **316A-316D** which in accordance with the hydraulic amplifier aspect of the present invention, amplifies the pressure which is brought to bear upon reaction mass **314**. Reaction mass **314** is preferably coupled to central shaft 310 having enlarged portion 320 constituting a drive piston. The apparatus means, in accordance with the teachings of the present application may be utilized to generate a vibrational seismic signal which may be imparted to the surface of the earth via base plate 302.

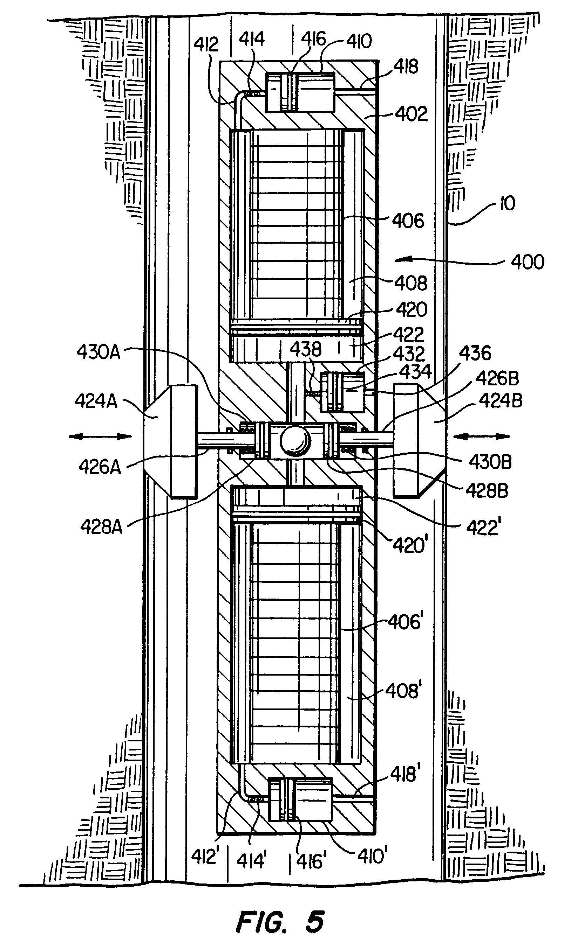

Finally, with reference to **Figure 5**, there is depicted a schematic illustration of a downhole radial compressional energy source adaption of the seismic source invention of the present invention. As in **Figure 3**, the radial compressional energy source **400** depicted within **Figure 5** includes a pair of piezoelectric element stacks **406** and **406'** which are disposed within fluid filled chambers **408** and **408'**. In the manner discussed above, fluid filled chambers **408** and **408'** are utilized to equalize the pressure on piezoelectric stacks **406** and **406'** by means of equalization chambers **410** and **410'** respectively. As an additional option in the embodiment depicted within **Figure 5**, multiple additional equalization chambers such as chamber **432** may be provided, each including a piston **434** which is acted upon by the pressure of borehole fluids via aperture **436**. The movement of piston **434** acts upon the fluid therein which is then coupled via passage **438** to provide pressure equalization on both sides of power piston **420**.

The operation of radial compressional energy source 400 with reaction mass 402 is identical in concept to the previous embodiments disclosed. That is, the application of a suitable time varying voltage to piezoelectric stabs **406** and **406'** will cause a corresponding elongation and contraction thereof, bearing upon power pistons **420** and **420'**. The movement of power pistons **420** and **420'** within power chambers **422** and **422'** will cause a force to be applied to drive pistons **428A** and **428B**. As is illustrated, drive pistons **428A** and **428B** are coupled via rods **426A** and **426B** to cause impact pistons **424A** and **424B** to compress the inner walls of borehole **10**. In the embodiment disclosed, spring elements **430A** and **430B** are utilized to bias drive pistons **428A** and **428B** into a refracted position, thereby facilitating the insertion of rapid compressional source **400** into the borehole. Of course, those skilled in the art will appreciate that multiple impact pistons may be utilized to generate a radial compressional energy wave outward from the axis of borehole **10** in the manner depicted herein.

While the invention has been particularly shown and described with reference to a preferred embodiment, it will be understood by those skilled in the art that various changes in form and detail may be made therein within the scope of the invention as claimed.

## Claims

1. A seismic energy source apparatus (20,100,200,400) for imparting seismic energy into earth formations, said seismic energy source comprising: a hydraulic system containing a substantially incompressible fluid and having at least one power piston (90,90'; 112,112'; 220,220'; 316A -316D; 420,420') and at least one drive piston (84,84'; 120A -120D; 224,224'; 428A, 428B, 320) wherein small movements in relation to a power piston generate substantially larger movements in relation to a drive piston; at least one piezoelectric element (92,92'; 110,110'; 206,206'; 312A-312D; 406,406**'**) adapted to elongate and contract in response to the application of an appropriate electrical signal, the or each said piezoelectric element being coupled to a power piston to transmit movement thereto; and means (26; 228; 302; 424A,424B) for imparting seismic energy into earth formations in response to movement of the or each drive piston.

2. Apparatus according to claim 1, wherein the or each piezoelectric element comprises a stack of a plurality of thin discs of piezoelectric material.

3. Apparatus according to claim 1 or 2, wherein the or each piezoelectric element is mounted directly to a power piston.

4. Apparatus according to claim 1,2 or 3, wherein the or each piezoelectric element is mounted within a fluid filled chamber (208; 208'; 408,408') adapted to impart pressure to said piezoelectric element.

5. Apparatus according to any of claims 1 to 4, which comprises a sonde (24; 102; 402) adapted to be lowered into a wellbore; clamping means (26; 104) for selectively clamping said sonde within said wellbore at a selected depth; said hydraulic system and piezoelectric element(s) being housed in said sonde; and wherein said means for imparting seismic energy comprises a reaction mass (70; 106; 314; 402) coupled to a drive piston, wherein application of an appropriate electrical signal to said piezoelectric element will result in a substantial movement of said reaction mass to impart seismic energy into said earth formations surrounding said wellbore.

6. Apparatus according to claim 5, wherein said reaction mass is mounted within said sonde so as either to move longitudinally within said sonde in response to the movement of said drive piston or to move rotationally within said sonde in response to the movement of said drive piston.

7. Apparatus according to claims 5 or 6, wherein said clamping means comprises at least one movable pad (32,34) and means (38) for urging said pad radially outward into contact with said wellbore, said urging means (38) preferably being coupled to a pneumatic system.

8. Apparatus according to any of claims 1 to 4, which comprises a sonde (24; 102; 402) adapted to be lowered into a wellbore; packer means (202,202') for selectively isolating said sonde within a closed volume (204) of fluid within said wellbore; the hydraulic system and the piezoelectric element being housed within said sonde; and wherein the apparatus also includes a second volume of substantially incompressible fluid coupled to said drive piston and disposed within said sonde, separated from said fluid within said closed volume of said wellbore by a flexible membrane (228), wherein application of an appropriate electrical signal to said piezoelectric element will result in the application of fluid pressure energy to said fluid within said wellbore through said flexible membrane.

9. Apparatus according to claim 8, wherein there are two piezoelectric elements (206,206') arranged longitudinally within said sonde on opposite sides of said second volume of substantially incompressible fluid.

10. Apparatus according to any of claims 1 to 9, wherein said substantially incompressible fluid and/or said second volume of substantially incompressible fluid comprises mercury.

11. A method of seismic surveying wherein there is used an apparatus as claimed in any of claims 1 to 10.

## Patentansprüche

1. Vorrichtung (20, 100, 200, 400) als Quelle seismischer Energie zur Übertragung seismischer Energie auf Erdformationen, welche seismische Energiequelle aufweist: ein hydraulisches System, das ein im wesentlichen inkompressibles Fluid enthält und das wenigstens einen Arbeitskolben (90, 90'; 112, 112'; 220, 220'; 316A-316D; 420, 420') und wenigstens einen Antriebskolben (84, 84'; 120A-120D; 224, 224'; 428A, 428B, 320) hat, wobei geringe Bewegungen in Bezug auf einen Arbeitskolben wesentlich größere Bewegungen in Bezug auf einen Antriebskolben erzeugen; wenigstens ein piezoelektrisches Element (92, 92'; 110, 110'; 206, 206'; 312A-312D; 406, 406'), das eingerichtet ist, um sich unter Ansprechen auf das Anlegen eines geeigneten elektrischen Signals auszudehnen und zusammenzuziehen, wobei das oder jedes piezoelektrische Element an einen Arbeitskolben gekoppelt ist, um auf diesen Bewegung zu übertragen; und Mittel (26; 228; 302; 424A, 424B) zur Übertragung seismischer Energie auf Erdformationen unter Ansprechen auf die Bewegung des oder jedes Antriebskolbens.

2. Vorrichtung nach Anspruch 1, dadurch gekennzeichnet, daß das oder jedes piezoelektrische Element einen Stapel aus einer Vielzahl dünner Scheiben aus piezoelektrischem Material aufweist.

3. Vorrichtung nach Anspruch 1 oder 2, dadurch gekennzeichnet, daß das oder jedes piezoelektrische Element direkt an einem Arbeitskolben angebracht ist.

4. Vorrichtung nach Anspruch 1, 2 oder 3, dadurch gekennzeichnet, daß das oder jedes piezoelektrische Element innerhalb einer fluidgefüllten Kammer (208; 208'; 408, 408') angebracht ist, die eingerichtet ist, um Druck auf das piezoelektrische Element zu übertragen.

5. Vorrichtung nach einem der Ansprüche 1 bis 4, gekennzeichnet durch eine Sonde (24; 102; 402), die in eine Bohrung herablaßbar ist; Klemmittel (26; 104) zur wahlweisen Klemmfeststellung der Sonde in der Bohrung in einer ausgewählten Tiefe; dadurch, daß das hydraulische System und das (die) piezoelektrische(n) Element(e) in der Sonde untergebracht sind; und daß die Mittel zur Übertragung seismischer Energie eine Reaktionsmasse (70; 106; 314; 402) aufweisen, die an einen Antriebskolben gekoppelt ist, wobei das Anlegen eines geeigneten elektrischen Signals an das piezoelektrische Element zu einer wesentlichen Bewegung der Reaktionsmasse zur Übertragung seismischer Energie auf die die Bohrung umgebenden Erdformationen führt.

6. Vorrichtung nach Anspruch 5, dadurch gekennzeichnet, daß die Reaktionsmasse innerhalb der Sonde derart angebracht ist, daß sie sich unter Ansprechen auf die Bewegung des Antriebskolbens entweder längs oder drehend innerhalb der Sonde bewegt.

7. Vorrichtung nach Anspruch 5 oder 6, dadurch gekennzeichnet, daß die Klemmittel wenigstens eine bewegbare Anlage (32, 34) und Mittel (38) aufweisen, die die Anlage radial nach außen in Berührung mit der Bohrung drücken, wobei diese Druckmittel (38) vorzugsweise an ein pneumatisches System gekoppelt sind.

8. Vorrichtung nach einem der Ansprüche 1 bis 4, gekennzeichnet durch eine in eine Bohrung herablaßbare Sonde (24; 102; 402); Packermittel (202, 202') zur wahlweisen Isolierung der Sonde innerhalb eines geschlossenen Fluidvolumens (204) innerhalb der Bohrung; dadurch, daß das hydraulische System und das piezoelektrische Element innerhalb der Sonde untergebracht sind; und daß die Vorrichtung auch ein zweites Volumen eines im wesentlichen inkompressiblem Fluids enthält, das mit dem Antriebskolben gekoppelt und innerhalb der Sonde angeordnet und durch eine flexible Membran (228) von dem Fluid in dem abgeschlossenen Volumen der Bohrung getrennt ist, wobei das Anlegen eines geeigneten elektrischen Signals an das piezoelektrische Element zu einer Anlage von Fluiddruckenergie durch die flexible Membran an das Fluid in der Bohrung führt.

9. Vorrichtung nach Anspruch 8, dadurch gekennzeichnet, daß zwei piezoelektrische Elemente (206, 206') längs innerhalb der Sonde an entgegengesetzten Seiten des zweiten Volumens des im wesentlichen inkompressiblen Fluids angeordnet sind.

10. Vorrichtung nach einem der Ansprüche 1 bis 9, dadurch gekennzeichnet, daß das im wesentlichen inkompressible Fluid und/oder das zweite Volumen des im wesentlichen inkompressiblen Fluids Quecksilber enthält.

11. Verfahren zur seismischen Vermessung unter Verwendung einer Vorrichtung nach einem der Ansprüche 1 bis 10.

## Revendications

1. Dispositif (20, 100, 200, 400) formant source d'énergie sismique, destiné à communiquer une énergie sismique dans des formations terrestres, ladite source d'énergie sismique comportant : un dispositif hydraulique contenant un fluide pratiquement incompressible et ayant au moins un piston de puissance (90, 90'; 112, 112'; 220, 220'; 316A à 316D; 420, 420') et au moins un piston d'entraînement (84, 84'; 120A à 120D; 224, 224'; 428A, 428B, 320) dans lequel de petits déplacements du piston de puissance engendrent des déplacements relativement importants du piston d'entraînement; au moins un élément piézoélectrique (92, 92'; 110, 110'; 206, 206'; 312A à 312D; 406, 406') conçu pour s'allonger et se contracter en réponse à l'application d'un signal électrique approprié, le ou chaque élément piézoélectrique étant relié à un piston de puissance pour transmettre un déplacement à celui-ci; et des moyens (26; 228; 302; 424A, 424B) destinés à appliquer une énergie sismique dans des formations terrestres en réponse au déplacement du piston ou de chaque piston d'entraînement.

2. Dispositif selon la revendication 1, dans lequel l'élément piézoélectrique ou chaque élément piézoélectrique est constitué d'un empilage de plusieurs disques minces de matériau piézoélectrique.

3. Dispositif selon la revendication 1 ou 2, dans lequel l'élément piézoélectrique ou chaque élément piézoélectrique est monté directement sur un piston de puissance.

4. Dispositif selon la revendication 1, 2 ou 3, dans lequel l'élément piézoélectrique ou chaque élément piézoélectrique est monté à l'intérieur d'une chambre remplie de fluide (208, 208'; 408, 408') adaptée pour appliquer une pression sur ledit élément piézoélectrique.

5. Dispositif selon l'une quelconque des revendications 1 à 4, qui comporte une sonde (24; 102; 402) adaptée pour être abaissée dans un alésage de puits; des moyens de blocage (26; 104) destinés à bloquer de manière sélective ladite sonde à l'intérieur dudit alésage de puits à une profondeur choisie; ledit dispositif hydraulique et le ou lesdits éléments piézoélectriques étant reçus dans ladite sonde; et dans lequel lesdits moyens destinés à appliquer une énergie sismique comportent une masse de réaction (70; 106; 314; 402) accouplée à un piston d'entraînement, dans lequel l'application d'un signal électrique approprié audit élément piézoélectrique entraîne un déplacement important de ladite masse de réaction pour appliquer une énergie sismique dans lesdites formations terrestres entourant ledit alésage de puits.

6. Dispositif selon la revendication 5, dans lequel ladite masse de réaction est montée à l'intérieur de ladite sonde de manière soit à se déplacer longitudinalement à l'intérieur de ladite sonde en réponse au déplacement dudit piston d'entraînement, soit à se déplacer en rotation à l'intérieur de ladite sonde en réponse au déplacement dudit piston d'entraînement.

7. Dispositif selon la revendication 5 ou 6, dans lequel lesdits moyens de serrage comportent au moins un patin mobile (32, 34) et des moyens (38) pour solliciter ledit patin radialement vers l'extérieur en contact avec ledit alésage de puits, lesdits moyens de sollicitation (38) étant de préférence reliés à un dispositif pneumatique.

8. Dispositif selon l'une quelconque des revendications 1 à 4, qui comporte une sonde (24; 102; 402) adaptée pour être abaissée jusque dans un alésage de puits; des moyens (202, 202') formant garniture d'étanchéité pour isoler de manière sélective ladite sonde à l'intérieur d'un volume fermé (204) de fluide situé à l'intérieur dudit alésage de puits; le dispositif hydraulique et l'élément piézoélectrique étant reçus à l'intérieur de ladite sonde; et dans lequel le dispositif comporte également un second volume de fluide pratiquement incompressible associé audit piston d'entraînement et disposé à l'intérieur de ladite sonde en étant séparé dudit fluide situé à l'intérieur dudit volume fermé dudit alésage de puits par une membrane souple (228), dans lequel l'application d'un signal électrique approprié audit élément piézoélectrique entraîne l'application, à travers ladite membrane souple, d'une énergie de pression de fluide vers ledit fluide situé à l'intérieur dudit alésage de puits.

9. Dispositif selon la revendication 8, dans lequel il existe deux éléments piézoélectriques (206, 206') agencés longitudinalement à l'intérieur de ladite sonde sur des côtés opposés dudit second volume de fluide pratiquement incompressible.

10. Dispositif selon l'une quelconque des revendications 1 à 9, dans lequel ledit fluide pratiquement incompressible et/ou ledit second volume de fluide pratiquement incompressible sont constitués de mercure.

11. Procédé de surveillance sismique dans lequel il est utilisé un appareil tel que revendiqué dans l'une quelconque des revendications 1 à 10.
